# EUROPÄISCHE PATENTSCHRIFT

(11) **EP 1 208 029 B1**
(45) Veröffentlichungstag und Bekanntmachung des Hinweises auf die Patenterteilung: **28.07.2004**
(21) Anmeldenummer: 01944961.0
(22) Anmeldetag: 30.05.2001
(51) Int. Cl.: B62B 3/18

(54) **STAPELBARER EINKAUFSWAGEN**
STACKABLE SHOPPING CART
CHARIOT POUR MAGASINS POUVANT ETRE INSERE DANS UN AUTRE CHARIOT

(30) Priorität: 09.06.2000 DE 10028626
(43) Veröffentlichungstag der Anmeldung: 29.05.2002
(73) Patentinhaber: WANZL METALLWARENFABRIK GMBH, D-89336 Leipheim (DE)
(72) Erfinder: SCHEFFLER, Hans, 89233 Neu-Ulm/Burlafingen (DE)
(86) Internationale Anmeldenummer: PCT/DE2001/002055
(87) Internationale Veröffentlichungsnummer: WO 2001/094184

(56) Entgegenhaltungen:
- EP-A- 0 676 323
- EP-A- 0 684 176
- DE-A- 3 631 701
- DE-U- 8 500 639
- GB-A- 2 317 593

## Beschreibung

Die Erfindung betrifft einen stapelbaren Einkaufswagen gemäß dem Oberbegriff des Anspruchs 1, wie er auch von der DE-U-8 500 639 gezeigt wird.

In der EP 0 684 176 B1 ist ein Einkaufswagen beschrieben, dessen Abstelleinrichtung sich besonders zur Aufnahme von schrumpfverpackten Flaschengebinden, die mit einem Tragehenkel versehen sind eignet. Auf der Abstelleinrichtung lassen sich jedoch auch noch andere Waren abstellen, beispielsweise Waschmittelschachteln, Windelpackungen und dergleichen, wobei festgestellt wurde, dass es mit dem Beladen der Abstelleinrichtung dann Schwierigkeiten gibt, wenn es sich um Ware handelt, die schwerer als die eben genannten Waren sind und die vor allen Dingen keinen Tragehenkel aufweisen. Da man beim Beladen der Abstelleinrichtung diese mit einer Hand in der Gebrauchslage halten und mit der anderen Hand das schwere Warenstück irgendwie tragen muss, erweist sich in solchen Fällen das Beladen der Abstelleinrichtung als umständlich.

Das deutsche Gebrauchsmuster G 85 00 639.4 beschreibt einen Einkaufswagen für Selbstbedienungsläden, die mit einer Abstellvorrichtung für Kisten oder dergleichen ausgestattet ist. Diese Abstellvorrichtung weist einen um eine horizontale Achse verschwenkbaren Stützbügel auf, an dem eine ebenfalls um eine horizontale Achse begrenzt bewegbar angeordnete Abstellfläche vorgesehen ist, wobei das vordere Ende dieser Abstellfläche auf einem Führungsbügel verschiebbar abgestützt ist, der sich unterhalb des Warenkorbes befindet. Die Abstellvorrichtung lässt sich nach rückwärts in eine Gebrauchslage und aus dieser wieder zurück in eine Nichtgebrauchslage bewegen, wobei die Abstellfläche immer am Führungsbügel aufliegt. Um nun zu vermeiden, dass sich der Abstellrost nach dem Wegschwenken des Stützbügels vom Warenkorb zur Bereitstellung einer Stellfläche für eine Kiste oder einen Flaschenträger wieder unter den Warenkorb schiebt, bevor die Last auf die Stellfläche gesetzt werden kann, ist die Stellfläche an ihrem freien Ende mit einer Abkröpfung versehen, so dass sich die Abstellfläche, bevor ein Querstab an den seitlichen Schenkeln des Führungsbügels anläuft, geringfügig absenkt und damit die Abstellfläche und den Stützbügel in der ausgefahrenen Stellung solchermaßen fixiert, dass diese ausgefahrene Stellung nur unter Überwindung eines bestimmten Widerstandes verlassen werden kann.

Ausgehend von diesem Stand der Technik ist es Aufgabe der Erfindung, einen Einkaufswagen der hier vorliegenden Art so weiterzuentwickeln, dass dessen in Gebrauchslage befindliche Abstelleinrichtung, die lediglich mit Hilfe ihrer beiden Tragarme am Einkaufswagen abgestützt ist, einfach und bequem auch mit relativ schwerer und großvolumiger Ware beladen werden kann, die keine Tragschenkel aufweist.

Die Lösung der Aufgabe wird erreicht durch einen Einkaufswagen gemäß Anspruch 1.

Durch die vorgeschlagene Lösung lässt sich die Abstelleinrichtung nach rückwärts in die Gebrauchslage verschwenken, in der sie zum Zwecke des Beladens verharrt. Dadurch kann ein schwerer, eher unhandlich gestalteter Gegenstand, beispielsweise ein kleinerer Kartoffelsack, mit beiden Händen getragen und auf der in Gebrauchslage verharrender Abstelleinrichtung abgestellt werden. Man hat somit beide Hände frei zum Tragen dieses Gegenstandes und braucht nicht mehr mit einer Hand die ausgeschwenkte Abstelleinrichtung zu halten.
Die Intensität des Zusammenwirkens der Abstelleinrichtung mit dem wenigstens einen Haltemittel lässt sich in vorteilhafter Weise zumindest so einstellen, dass das Eigengewicht der Abstelleinrichtung nicht ausreicht, um ein selbsttätiges Lösen der Abstelleinrichtung aus der ausgeschwenkten Lage zu verursachen. Man wird die Haltekräfte so bestimmen, dass erst ein etwas kräftigerer Stoß auf die ausgeschwenkte Abstelleinrichtung oder die auf der Abstelleinrichtung befindliche Last selbst ein Lösen der Abstelleinrichtung aus der ausgeschwenkten Lage bewirkt.

Die Erfindung wird anhand von Ausführungsbeispielen näher erläutert. Es zeigt
Fig. 1 einen Einkaufswagen mit einer ausschwenkbaren Abstelleinrichtung;
Fig. 2 ein am Korb angebrachtes Haltemittel sowie
Fig. 3 ein am Fahrgestell vorgesehenes Haltemittel.

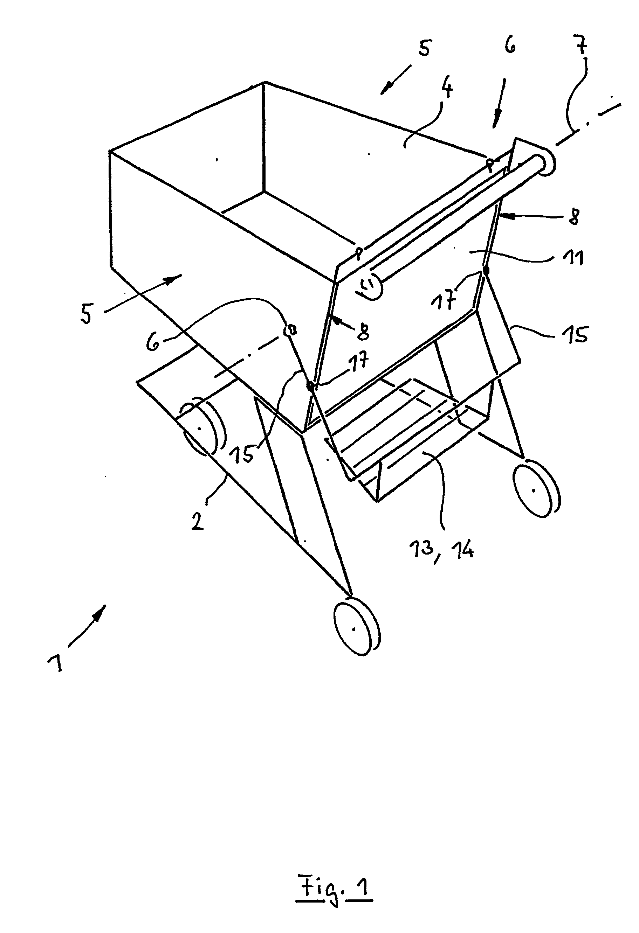

Fig. 1 zeigt einen stapelbaren Einkaufswagen 1, der in bekannter Weise so gestaltet ist, dass dieser in einen gleichen Einkaufswagen 1 platzsparend einschiebbar ist. Das Fahrgestell 2 trägt einen mit einer schwenkbaren Rückwand 11 ausgestatteten Korb 4 zur Aufnahme von Ware. An der Rückseite des Einkaufswagens 1 ist eine mit einer Abstellfläche 14 ausgestattete Abstelleinrichtung 13 angeordnet, die sich zur Aufnahme weiterer Ware, insbesondere schrumpfverpackter Getränkeflaschen eignet. Die Abstelleinrichtung 13 ist entsprechend der EP 0 684 176 B1 nach Art einer Schaukel gestaltet, um eine horizontale Achse 7 begrenzt verschwenkbar gelagert und lässt sich nach rückwärts aus einer Nichtgebrauchslage in eine Gebrauchslage bewegen, aus der sie wieder in ihre Nichtgebrauchslage zurückkehren kann. An den Seitenwänden 5 des Korbes 4 befindet sich je ein Lager 6, an welchen jeweils ein zur Abstelleinrichtung 13 gehörender Tragarm 15 verschwenkbar gelagert ist. An der hinteren Begrenzung 8 einer jeden Seitenwand 5 ist je ein Haltemittel 17 angeordnet. In Gebrauchslage der Abstelleinrichtung 13 wirken die an den hinteren Begrenzungen 8 sich abstützenden Haltemittel 17 mit den Tragarmen 15 der Abstelleinrichtung 13 so zusammen, dass das Eigengewicht der ausgeschwenkten Abstelleinrichtung 13 nicht ausreicht, die ausgeschwenkte und unbeladene Abstelleinrichtung aus ihrer arretierten Lage von selbst zu lösen. Es ist in äquivalenter Weise natürlich auch möglich, die Haltemittel 17 an den Tragarmen 15 zu befestigen, so dass die Haltemittel 17 mit den hinteren Begrenzungen 8 der Seitenwände 5 eine klemmende Verbindung eingehen.

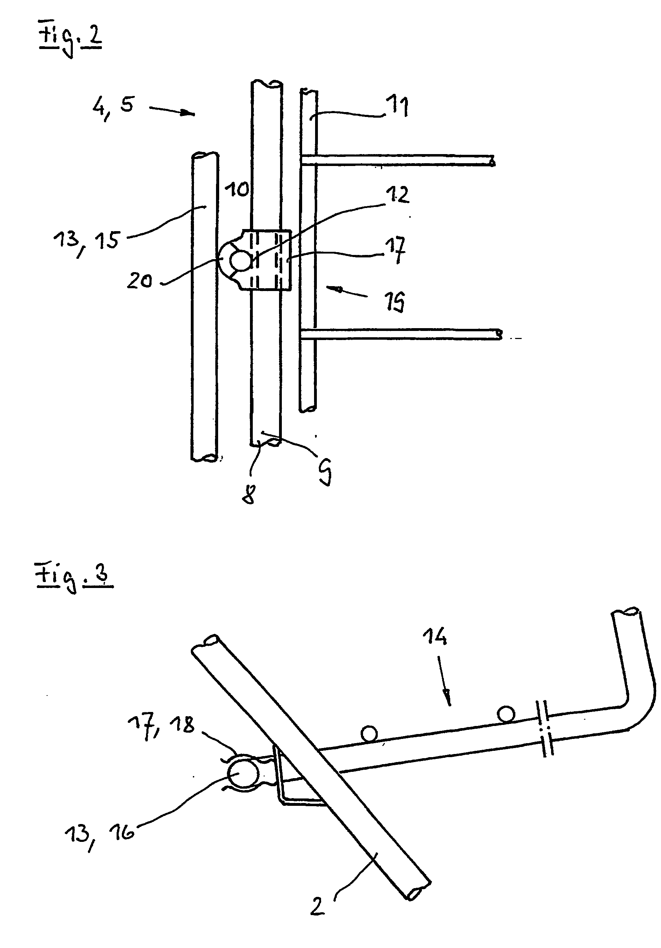

Fig. 2 zeigt ein in Fig. 1 genanntes Haltemittel 17 zusammen mit einem Tragarm 15 der Abstelleinrichtung 13. Das Haltemittel 17 ist aus zähelastischem Kunststoff gebildet und an einem Kreuzungspunkt 12 angeordnet, der in der Zeichnung durch den hinteren linken, von oben nach unten führenden Randdraht 9 des gewöhnlich aus Drähten gefertigten Korbes 4 oder der linken Seitenwand 5 einerseits und durch einen etwa horizontal verlaufenden, die beiden Seitenwände 5 und die Stirnwand des Korbes 4 umfassenden Umrandungsdraht 10 gebildet ist. Der Umrandungsdraht 10 und der Randdraht 9 sind miteinander verschweißt. Das Haltemittel 17 weist mit dem Umrandungsdraht 10 und mit dem Randdraht 9 korrespondierende Vertiefungen 19 auf, mit Hilfe derer sich das Haltemittel 17 schnappschlüssig und ortsfest am Kreuzungspunkt 12 befestigen lässt. Das Haltemittel 17 weist eine zum linken Tragarm 15 der Abstelleinrichtung 13 weisende Erhöhung 20 auf. Das Haltemittel 17 ist nun so platziert, dass der Tragarm 15 in weitgehend ausgeschwenkter Lage der Abstelleinrichtung 13 entweder eine Klemmverbindung mit dem Haltemittel 17 eingeht oder durch geringe Stauchung der Erhöhung 20 oder durch eigenes geringes Ausweichen über die Erhöhung 20 hinaus geführt wird und hinter der Erhöhung 20 leicht einrastet. Am rechten hinteren Rand des Korbes 4 ist die gleiche Anordnung und Ausführung vorgesehen. Das Zusammenwirken der Tragarme 15 mit den beiden an den Kreuzungspunkten 12 sich abstützenden Haltemitteln 17 ist nun so gewählt, dass die leere ausgeschwenkte Abstelleinrichtung 13 zumindest durch ihr Eigengewicht nicht von selbst ihre Nichtgebrauchslage aufsuchen kann. Erst ein kleiner Stoß auf die ausgeschwenkte Abstelleinrichtung 13 oder eine auf der Abstelleinrichtung 13 abgestellte Last sind in der Lage, die zwischen der Abstelleinrichtung 13 und den Haltemitteln 17 bestehende Klemmwirkung zu überwinden.

Beim Ausführungsbeispiel nach Fig. 3 ist an geeigneter Stelle des Fahrgestelles 2 an jeder Längsseite ein als rachenförmige Klammer 18 ausgebildetes Haltemittel 17 vorgesehen. Die Zeichnung zeigt das an der linken Seite des Einkaufswagens 1 angeordnete Haltemittel 17. In der Klammer 18 steckt lösbar ein von der Abstelleinrichtung 13 nach außen führender Vorsprung 16. Die Abstelleinrichtung 13 befindet sich in ausgeschwenkter Lage, sie nimmt also ihre Gebrauchslage ein. Auch hier ist die Verbindung zwischen der Abstelleinrichtung 13 und den beiden Haltemitteln 17 so gewählt, dass das Eigengewicht der Abstelleinrichtung 13 noch nicht ausreicht, ein selbstständiges Lösen der Abstelleinrichtung 13 von den Haltemitteln 17 und dadurch ein Zurückschwenken der Abstelleinrichtung 13 in die Nichtgebrauchslage zu bewirken. Auch hier muss wieder durch einen etwas kräftigen Stoß oder durch Aufsetzen einer Last entsprechend nachgeholfen werden.

Es soll nicht unerwähnt bleiben, dass durchaus Teile des Einkaufswagens 1, etwa das Fahrgestell 2 oder der Korb 4 selbst die Funktion eines Haltemittels 17 übernehmen können. Leichte Schrägen, geringe Erhöhungen oder Vertiefungen an geeigneten Stellen des Korbes 4 oder des Fahrgestelles 2 oder der Abstelleinrichtung 13 können in Verbindung mit der in Gebrauchslage befindlichen, also ausgeschwenkten Abstelleinrichtung 13 beispielsweise eine klemmende Wirkung auf die Abstelleinrichtung 13 ausüben und diese unbeladen in der Gebrauchslage halten. Auch ist es möglich, nur ein Haltemittel 17, etwa auf der zentralen Längsachse des Einkaufswagens 1 gelegen, am Korb 4 oder am Fahrgestell 2 oder auch an der vordersten Begrenzung der Abstellfläche 14 der Abstelleinrichtung 13 vorzusehen. Im zuletzt genannten Falle kann das Haltemittel 17 beispielsweise mit der hinteren unteren Begrenzung des Korbes 4 zusammenwirken.

## Patentansprüche

1. Stapelbarer Einkaufswagen (1), mit einem Fahrgestell (2), das einen Korb (4) zur Aufnahme von Ware trägt und mit einer im rückwärtigen Bereich des Einkaufswagens (1) befindlichen, zur Aufnahme weiterer Ware bestimmten und um eine horizontale Achse (7) verschwenkbaren Abstelleinrichtung (13), die sich nach rückwärts aus einer Nichtgebrauchslage in eine Gebrauchslage und wieder zurück bewegen lässt, wobei die mit einer Abstellfläche (14) und mit Tragarmen (15) ausgestattete Abstelleinrichtung (13) nach Art einer Schaukel gestaltet ist und wobei wenigstens ein Haltemittel (17) vorgesehen ist, das in Verbindung mit einem weiteren Teil des Einkaufswagens (1) ein durch das Eigengewicht der Abstelleinrichtung (13) verursachtes Zurückschwenken der Abstelleinrichtung (13) aus der Gebrauchslage in die Nichtgebrauchslage verhindert, **dadurch gekennzeichnet, dass** das mindestens eine Haltemittel (17)
- entweder an wenigstens einem der beiden Tragarme (15)
- oder an jeder Längsseite des Fahrgestelles (2)
- oder an der vordersten Begrenzung der Abstellfläche (14) der Abstelleinrichtung (13) angeordnet ist, und dass die Abstelleinrichtung (13) in Nichtgebrauchslage nur mit den Tragarmen (15) am restlichen Einkaufswagen (1) abgestützt ist.

2. Einkaufswagen nach Anspruch 1, **dadurch gekennzeichnet, dass** die Haltemittel (17) an den hinteren Begrenzungen (8) der Seitenwände (5) des Korbes (4) angeordnet sind.

3. Einkaufswagen nach Anspruch 1 oder 2, **dadurch gekennzeichnet, dass** das wenigstens eine Haltemittel (17) durch eine rachenförmige Klammer (18) gebildet ist.

4. Einkaufswagen nach einem der Ansprüche 1 bis 3, **dadurch gekennzeichnet, dass** die Haltemittel (17) durch Schrägen oder Erhöhungen oder Vertiefungen gebildet sind, die sich am Korb (4) oder am Fahrgestell (2) oder an der Abstelleinrichtung (13) befinden.

## Claims

1. A nestable shopping trolley (1) comprising a wheel frame (2) carrying a basket (4) for holding goods, and a shelf arrangement (13) which is located in the rear region of the shopping trolley (1), is intended to hold further goods and is pivotable about a horizontal axis (7) and which can be moved rearwards from a position of non-use into a position of use and back again, wherein the shelf arrangement (13), which is provided with a shelf surface (14) and supporting arms (15), is constructed in the manner of a swing and wherein at least one holding means (17) is provided which, in conjunction with a further part of the shopping trolley (1), prevents the shelf arrangement (13) from pivoting back from the position of use into the position of non-use under its own weight, **characterised in that** the at least one holding means (17) is arranged
- either on at least one of the two supporting arms (15)
- or on each longitudinal side of the wheel frame (2)
- or on the forwardmost boundary of the shelf surface (14) of the shelf arrangement (13),
and **in that** the shelf arrangement (13), in the position of non-use, is supported on the rest of the shopping trolley (1) only by its supporting arms (15).

2. A shopping trolley according to claim 1, **characterised in that** the holding means (17) are arranged on the rear boundaries (8) of the side walls (5) of the basket (4).

3. A shopping trolley according to claim 1 or 2, **characterised in that** the at least one holding means (17) is formed by a spring clip (18).

4. A shopping trolley according to any one of claims 1 to 3, **characterised in that** the holding means (17) are formed by inclinations or elevations or depressions provided on the basket (4) or on the wheel frame (2) or on the shelf arrangement (13).

## Revendications

1. Chariot à provisions (1) imbricable, comprenant un châssis de roulement (2) portant un panier (4) conçu pour recevoir des marchandises, et un système reposoir (13) qui est situé dans la région postérieure dudit chariot à provisions (1), est destiné à recevoir des marchandises supplémentaires, peut pivoter autour d'un axe horizontal (7) et peut être animé d'un mouvement vers l'arrière, d'une position de non-utilisation à une position d'utilisation, et inversement, ledit système reposoir (13), équipé d'une surface réceptrice (14) et de bras de support (15), étant configuré à la manière d'une balançoire, sachant qu'il est prévu au moins un moyen de retenue (17) qui, en association avec une partie supplémentaire du chariot à provisions (1), empêche un pivotement rétrograde du système reposoir (13), de la position d'utilisation à la position de non-utilisation, provoqué par le poids propre dudit système reposoir (13), **caractérisé par le fait que** le moyen de retenue (17), prévu au minimum, est disposé sur au moins l'un des deux bras de support (15) ou sur chaque côté longitudinal du châssis de roulement (2), ou bien sur la délimitation la plus antérieure de la surface réceptrice (14) du système reposoir (13) ; et **par le fait que**, en position de non-utilisation, ledit système reposoir (13) est en appui sur le reste du chariot à provisions (1), uniquement par les bras de support (15).

2. Chariot à provisions selon la revendication 1, **caractérisé par** te fait que les moyens de retenue (17) sont disposés sur les délimitations postérieures (8) des parois latérales (5) du panier (4).

3. Chariot à provisions selon la revendication 1 ou 2, **caractérisé par le fait que** le moyen de retenue (17), prévu au minimum, est matérialisé par une agrafe (18) en forme de mâchoire.

4. Chariot à provisions selon l'une des revendications 1 à 3, **caractérisé par le fait que** les moyens de retenue (17) sont matérialisés par des biseaux, des protubérances ou des renfoncements situé(e)s sur le panier (4), sur le châssis de roulement (2) ou sur le système reposoir (13).
